(19) Europäisches Patentamt / European Patent Office / Office européen des brevets

(11) **EP 3 341 987 B1**

(12) **FASCICULE DE BREVET EUROPEEN**

(45) Date de publication et mention de la délivrance du brevet:
**10.04.2019 Bulletin 2019/15**

(21) Numéro de dépôt: **16763907.9**

(22) Date de dépôt: **11.08.2016**

(51) Int Cl.:
*H01M 4/13* (2010.01)     *H01M 4/139* (2010.01)
*H01M 4/62* (2006.01)     *H01M 10/0525* (2010.01)
*H01M 10/0565* (2010.01)     *H01M 4/485* (2010.01)
*H01M 4/505* (2010.01)     *H01M 4/525* (2010.01)
*H01M 4/58* (2010.01)     *H01M 4/1391* (2010.01)
*H01M 4/1397* (2010.01)

(86) Numéro de dépôt international:
**PCT/FR2016/052064**

(87) Numéro de publication internationale:
**WO 2017/032940 (02.03.2017 Gazette 2017/09)**

(54) **BATTERIE AU LITHIUM-ION GELIFIEE**

LITHIUM-IONEN-GELBATTERIE

LITHIUM-ION GEL BATTERY

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **25.08.2015 FR 1557896**

(43) Date de publication de la demande:
**04.07.2018 Bulletin 2018/27**

(73) Titulaire: **Commissariat à l'Énergie Atomique et aux Énergies Alternatives**
**75015 Paris (FR)**

(72) Inventeurs:
• **SOLAN, Sébastien**
**38170 Seyssinet-pariset (FR)**
• **BOUTAFA, Laura**
**38130 Echirolles (FR)**
• **PICARD, Lionel**
**38170 Seyssinet-pariset (FR)**
• **RAVACHOL, Angèle**
**38100 Grenoble (FR)**

(74) Mandataire: **Cabinet Laurent & Charras**
**Le Contemporain**
**50 Chemin de la Bruyère**
**69574 Dardilly Cedex (FR)**

(56) Documents cités:
**EP-A1- 2 833 462       US-A1- 2011 311 864**
**US-A1- 2013 177 799**

**Description**

**DOMAINE DE L'INVENTION**

La présente invention concerne une batterie au lithium dont les électrodes et l'électrolyte se présentent sous la forme de gels. Les électrodes gel ainsi que l'électrolyte gel comprennent au moins un polymère et un composé dinitrile.
Le domaine d'utilisation de la présente invention concerne notamment le stockage de l'énergie.

**ETAT ANTERIEUR DE LA TECHNIQUE**

De manière générale, une batterie lithium-ion comprend les éléments suivants :

- un collecteur de courant de l'électrode positive ;
- une électrode positive comprenant un matériau d'insertion du cation lithium ;
- un constituant électrolytique ;
- une électrode négative ;
- un collecteur de courant de l'électrode négative ;
- un emballage souple ou un boitier rigide.

Le matériau d'insertion du cation lithium de l'électrode positive est généralement un matériau composite, par exemple du phosphate de fer lithié, $LiFePO_4$, ou un oxyde de métaux de transition (matériaux lamellaires : $LiCoO_2$ : oxyde de cobalt lithié, $LiNi_{0.33}Mn_{0.33}Co_{0.33}O_2$...).
Le constituant électrolytique séparant les électrodes de signes opposés, est généralement composé d'un séparateur polymère ou d'un composite microporeux imbibé d'électrolyte organique. Le séparateur assure la tenue mécanique, alors que l'électrolyte permet d'assurer le déplacement des ions lithium de l'électrode positive vers l'électrode négative et inversement (cas de la charge ou de la décharge) générant ainsi le courant. L'électrolyte comprend généralement un solvant et un sel de lithium tel que $LiPF_6$. Il est préférablement exempt de traces d'eau ou d'oxygène.
Le matériau d'électrode négative est généralement en carbone graphite, en silicium ou dans le cas des électrodes de puissance en matériau titanate ($Li_4Ti_5O_{12}$).
Les électrodes et le constituant électrolytique forment le coeur électrochimique de la batterie. Les collecteurs de courant sont généralement solidaires des électrodes et peuvent donc faire partie intégrante du coeur électrochimique.
Le collecteur de courant de l'électrode positive est généralement en aluminium, alors que le collecteur de courant de l'électrode négative est généralement en cuivre pour une électrode négative en carbone graphite, ou en aluminium pour une électrode négative en titanate.
Typiquement, une batterie peut comprendre une pluralité de coeurs électrochimiques sous la forme d'un empilement, notamment un empilement en vis-à-vis (empilement à plat ou bobiné).
Selon les applications concernées, l'emballage de la batterie peut être souple ou rigide.
Comme déjà précisé, la présence d'un électrolyte permet d'assurer le déplacement des ions lithium entre les électrodes de signes opposés. Lors de la préparation d'une batterie, l'insertion de l'électrolyte dans le coeur de pile peut être réalisé par :

- mise en place du coeur électrochimique et des collecteurs de courant dans une pochette constituant l'emballage, des pattes connectées aux collecteurs de courant sortant de cette pochette de manière à assurer la reprise de courant ;
- introduction d'un électrolyte liquide dans la pochette ;
- scellage de l'emballage, généralement par thermoscellage, pour assurer l'étanchéité du coeur électrochimique.

L'introduction de l'électrolyte nécessite donc l'utilisation d'un électrolyte liquide qui imprègne un séparateur d'électrodes.
A cet égard, le document CA 2 435 218 décrit l'utilisation de solvant dinitrile pour former un électrolyte liquide contenant des sels de lithium. En outre, les documents WO 2007/012174 et WO 2008/138110 décrivent l'utilisation de solvant dinitrile pour former un électrolyte supporté par un séparateur microporeux de type polyoléfine. Le document EP 2 833 462 divulgue une batterie lithium-ion où l'électrode positive, l'électrode négative et l'électrolyte se présentent tous les trois sous la forme de gels obtenus en mélangeant du polyéthylène oxyde et un agent plastifiant. Le document US 2013/177799 divulgue une batterie lithium-ion dont l'électrolyte se présente sous la forme d'un gel comprenant un polymère et un composé dinitrile de formule N=C-R-C=N ;R étant un groupement hydrocarboné $C_nH_{2n}$, n étant un nombre entier entre 1 et 2.
Quand bien même l'insertion d'un électrolyte liquide permet de préparer des batteries de manière satisfaisante, il existe un besoin de simplifier ce procédé notamment en utilisant un électrolyte solide.

D'autre part, dans le domaine des batteries souples, l'amélioration de la flexibilité du constituant électrolytique (séparateur + électrolyte) et des électrodes est également recherchée.

La présente invention répond à ces problèmes grâce à la mise au point d'une batterie dont le coeur électrochimique (constituant électrolytique + électrodes) est gélifié. Cette batterie comprend un électrolyte gel permettant notamment de s'affranchir de l'utilisation d'un séparateur conventionnel imbibé d'électrolyte liquide.

## EXPOSE DE L'INVENTION

La présente invention concerne une batterie lithium-ion dont le coeur électrochimique (électrolyte + électrodes) se présente sous forme gélifiée, apportant ainsi des propriétés de flexibilité à la batterie. En raison de sa forme gélifiée, cette batterie ne comprend pas de solvant libre.

Dans la batterie selon l'invention, la forme gélifiée de l'électrolyte n'altère pas les propriétés de conductivité ionique nécessaires à son bon fonctionnement. Il en est de même pour les électrodes gélifiées, dont les performances sont comparables à celles d'électrodes solides conventionnelles.

La forme gélifiée de l'électrolyte et des électrodes permet en outre d'améliorer les propriétés relatives à la sécurité et à la flexibilité de la batterie.

Plus précisément, la présente invention concerne une batterie lithium-ion comprenant :

- une électrode positive comprenant un matériau actif d'électrode positive, et avantageusement un sel de lithium ;
- un électrolyte comprenant un sel de lithium ;
- une électrode négative comprenant un matériau actif d'électrode négative, et avantageusement un sel de lithium.

Dans cette batterie lithium-ion, l'électrode positive, l'électrode négative et l'électrolyte se présentent tous les trois sous la forme de gels, et comprennent tous les trois un polymère et un composé dinitrile de formule $N\equiv C\text{-}R\text{-}C\equiv N$ ; R étant un groupement hydrocarboné $C_nH_{2n}$, n étant un nombre entier entre 1 et 2 ; le rapport massique du composé dinitrile/polymère étant compris entre 60/40 et 90/10.

En d'autres termes, la batterie selon l'invention comprend :

- une électrode positive sous forme de gel comprenant un matériau actif d'électrode positive, un polymère, un composé dinitrile, et avantageusement un sel de lithium ;
- un électrolyte gel comprenant un sel de lithium, un polymère et un composé dinitrile ;
- une électrode négative sous forme de gel comprenant un matériau actif d'électrode négative, un polymère, un composé dinitrile, et avantageusement un sel de lithium.

L'électrolyte étant sous forme de gel, la batterie selon l'invention ne nécessite pas de séparateur conventionnel. L'électrolyte gel permet à la fois d'assurer le déplacement des ions lithium et la fonction de séparateur d'électrodes.

Le composé dinitrile mis en oeuvre présente un point de fusion avantageusement supérieur à 20°C, facilitant ainsi la manipulation de l'électrolyte et des électrodes lors de la préparation de la batterie selon l'invention. Le composé dinitrile correspond au solvant du milieu électrolytique. Celui-ci forme un même milieu au sein de l'ensemble des compartiments de la batterie.

De manière avantageuse, le composé dinitrile est le succinonitrile (n = 2) ou le malononitrile (n = 1).

Selon un mode de réalisation particulier, le composé dinitrile utilisé pour préparer les trois constituants « gel » (électrodes + électrolyte) du coeur électrochimique de la batterie selon l'invention est le succinonitrile.

Le succinonitrile est un composé organique cristallin hyper-plastique ininflammable et non volatile (point d'ébullition 266°C) ayant un point de fusion de 57°C. Sa plage d'utilisation potentielle en température est comprise entre -20°C et 250°C. A titre d'exemple, une solution à 1M de sel de LiTFSi dans le succinonitrile présente une conductivité ionique de l'ordre de $3.10^{-3}$ S.cm$^{-1}$ à 20°C.

De manière générale, le composé dinitrile permet notamment de solubiliser le sel de lithium de l'électrolyte et éventuellement des électrodes. En outre, sa combinaison avec un polymère permet d'obtenir un gel.

Pour obtenir un gel, le rapport massique composé dinitrile/polymère est compris entre 60/40 et 90/10, plus avantageusement entre 65/35 et 75/25, et encore plus avantageusement de l'ordre de 70/30.

Le polymère mis en oeuvre dans l'invention est avantageusement choisi dans le groupe comprenant le poly(styrène-co-acrylonitrile) ; le poly(butylméthacrylate-co-isobutylméthacrylate) ; le poly(butylméthacrylate) ; le poly(isobutylméthacrylate) ; le poly(butylméthacrylate-co-méthylméthacrylate) ; le poly(méthacrylate de méthyle) (PMMA) ; le poly(fluorure de vinylidène-hexafluoropropylène) (PVdF-HFP) ; le polyéthylène oxyde (POE) ; et le polyvinylpyrrolidone (PVP).

Le sel de lithium mis en oeuvre dans l'électrolyte, et éventuellement dans l'électrode positive et/ou l'électrode négative, est avantageusement choisi dans le groupe comprenant LiTFSi (lithium bis-trifluorométhanesulfonimide) ; LiBOB (lithium bis(oxatlato)borate) ; $LiPF_6$ ; $LiClO_4$; $LiBF_4$; $LiAsF_6$; $LiCF_3SO_3$; $LiN(CF_3SO_2)_3$; $LiN(C_2F_5SO_2)$; et leurs mélanges.

Dans l'électrolyte, la concentration en sel de lithium est avantageusement comprise entre 0.5 et 5M dans le composé dinitrile, plus avantageusement de l'ordre de 1M notamment.

En outre, le rapport massique [composé dinitrile + sel de lithium] / [polymère] est avantageusement compris entre 60/40 et 90/10, plus avantageusement de l'ordre de 70/30. Ce rapport permet de maintenir des propriétés adéquates en termes de conductivité ionique apportée par le mélange [composé dinitrile + sel de lithium] et de tenue mécanique apportée par le polymère.

De manière avantageuse, l'électrode positive, l'électrode négative et l'électrolyte de la batterie selon l'invention comprennent le même polymère et/ou le même composé dinitrile et/ou le même sel de lithium.

De manière encore plus avantageuse, l'électrode positive, l'électrode négative et l'électrolyte (séparateur électrolyte formé par une membrane polymère gélifiée par l'électrolyte dinitrile/sel de lithium) de la batterie selon l'invention comprennent le même polymère, le même composé dinitrile, et le même sel de lithium.

Les matériaux actifs des électrodes positive et négative pouvant être utilisés dans la batterie selon l'invention correspondent notamment aux matériaux conventionnels décrits dans la littérature (Tarascon et al., Nature, 2001, 414, 359-367).

A titre d'exemple, on peut notamment citer :

- $LiFePO_4$ (LFP) et $LiNi_{0.33}Mn_{0.33}Co_{0.33}O_2$ (NMC) pour l'électrode positive ; et
- le titanate de type $Li_4Ti_5O_{12}$ (LTO), le carbone graphite ; le soufre ; le lithium métal ; et le silicium pour l'électrode négative.

Le matériau actif peut représenter 50 à 95%, par rapport à la masse de l'électrode (positive ou négative), plus avantageusement 80 à 70%.

En général, un matériau actif en silicium (électrode négative) subit une déformation volumique importante au cours des cycles de charge et de décharge, contrairement aux matériaux de type LFP, NMC ou LTO. Cette déformation peut atteindre 300% entre l'état complètement chargé et l'état complètement déchargé, entrainant ainsi la destruction progressive de la structure de l'électrode. Par conséquent, une électrode conventionnelle à base de silicium présente une durée de vie limitée. La présente invention permet également de résoudre ce problème, la forme gélifiée permet d'adapter les propriétés mécaniques des électrodes pour compenser les variations de volume, et ce sans compromettre la structure de l'électrode.

Outre le matériau actif, les électrodes comprennent avantageusement au moins un conducteur électronique. Celui-ci peut notamment être du noir de carbone et/ou des fibres de carbone. Il peut représenter 1 à 10%, par rapport à la masse de l'électrode, plus avantageusement 3 à 5%.

Comme déjà indiqué, les électrodes peuvent comprendre un sel de lithium. Dans la présente invention, l'électrolyte gélifié est intégré directement avec les matériaux d'électrodes dans la formulation en tant que liant d'électrode et électrolyte. Contrairement à l'art antérieur, il n'est donc pas nécessaire d'ajouter un électrolyte liquide une fois la batterie assemblée.

La concentration en sel de lithium dans les électrodes (positive ou négative) est avantageusement comprise entre 0.5 et 5M dans le composé dinitrile, plus avantageusement de l'ordre de 1M.

Dans l'électrode positive, la masse polymère + composé dinitrile représente avantageusement 20 à 60 % par rapport à la masse de l'électrode positive, plus avantageusement 30 à 40 %.

Dans l'électrode négative, la masse polymère + composé dinitrile représente avantageusement 20 à 60 % par rapport à la masse de l'électrode négative, plus avantageusement 30 à 40 %.

Les électrodes sont avantageusement associées à un collecteur de courant poreux. Le collecteur de courant de l'électrode positive et/ou de l'électrode négative est avantageusement un non-tissé en carbone.

L'utilisation d'un non-tissé en carbone pour les deux électrodes permet de conserver les propriétés de flexibilité des électrodes gélifiées. Elle permet également d'éviter les problèmes de corrosion, généralement rencontrés lorsque les matériaux actifs d'électrodes de type NMC sont utilisés en présence de sel de lithium de type LiTFSi et d'un collecteur de courant conventionnel en aluminium.

Ainsi, selon un mode de réalisation préféré, chacune des électrodes de la batterie selon l'invention est associée à un collecteur de courant constitué d'un non-tissé en carbone.

La batterie selon l'invention est avantageusement une batterie flexible. Elle peut également comprendre une pluralité de coeurs électrochimiques gélifiés (électrodes + électrolyte).

Selon un mode de réalisation particulier, la batterie comprend un emballage flexible. Ce dernier est généralement constitué d'un matériau composite multicouche, par exemple un empilement de couches d'aluminium recouvertes par un polymère de type polyéthylène, propylène, ou polyamide. Cet emballage souple peut également comprendre une couche adhésive qui peut être en polyester-polyuréthane.

La présente invention concerne également un procédé de préparation de cette batterie lithium-ion. Ce procédé comprend les étapes suivantes :

a/ préparation d'un électrolyte gel par :

- préparation d'une solution de sel de lithium dans un composé dinitrile de formule N≡C-R-C≡N, R étant un groupement hydrocarboné $C_nH_{2n}$, n étant un nombre entier entre 1 et 2 ;
- formation d'une encre d'électrolyte par mélange de cette solution avec un polymère, le rapport massique composé dinitrile/polymère étant compris entre 60/40 et 90/10 ;
- formation d'un électrolyte gel ;

b/ préparation d'une électrode positive gélifiée par :

- préparation d'une encre d'électrode positive contenant un matériau actif d'électrode positive, un polymère et un composé dinitrile de formule N≡C-R-C≡N, R étant un groupement hydrocarboné $C_nH_{2n}$, n étant un nombre entier entre 1 et 2, le rapport massique composé dinitrile/polymère étant compris entre 60/40 et 90/10 ;
- formation d'une électrode positive gélifiée, avantageusement par dépôt de l'encre d'électrode positive sur un collecteur de courant ;

c/ préparation d'une électrode négative gélifiée par :

- préparation d'une encre d'électrode négative contenant un matériau actif d'électrode négative, un polymère et un composé dinitrile de formule N≡C-R-C≡N, R étant un groupement hydrocarboné $C_nH_{2n}$, n étant un nombre entier entre 1 et 2, le rapport massique composé dinitrile/polymère étant compris entre 60/40 et 90/10 ;
- formation d'une électrode négative gélifiée, avantageusement par dépôt de l'encre d'électrode négative sur un collecteur de courant ;

d/ préparation d'une batterie par assemblage de l'empilement électrode positive/électrolyte/électrode négative ;
e/ optionnellement emballage de la batterie ainsi formée, avantageusement dans un emballage flexible.

L'électrolyte, mais aussi les électrodes peuvent être réalisés par voie solvant ou par voie UV (réticulation par exposition à un rayonnement ultraviolet).
En d'autres termes, la gélification peut être réalisée par évaporation d'un solvant ou par réticulation du polymère.
La voie solvant consiste à diluer le mélange « composé dinitrile/polymère » dans un solvant (SD) de dilution. Dans ce cas, l'encre (électrolyte et/ou électrode) des étapes a/ à c/ comprend ce solvant SD. La gélification est réalisée par évaporation du solvant SD.
Ainsi, selon un mode de réalisation particulier, l'encre des étapes a/ à c/ comprend un solvant SD, la formation de l'électrolyte gel et des électrodes positive et négative étant réalisée par évaporation du solvant SD.
Le solvant SD est avantageusement choisi dans le groupe comprenant N-méthyl-2-pyrrolidone (NMP), méthyl éthyl cétone (MEK), diméthylformamide (DMF), tétrahydrofurane (THF) et acétone.
Lors de l'étape a/, la solution de sel de lithium dans un composé dinitrile peut être diluée dans le solvant SD préalablement à son mélange avec un polymère.
Dans le cas de la formation des électrodes (étapes a/ et b/), le solvant SD peut être introduit en présence du matériau actif d'électrode, du polymère et du composé dinitrile.
Les polymères poly(styrène-co-acrylonitrile) et poly(fluorure de vinylidène-hexafluoropropylène) (PVdF-HFP) sont particulièrement adaptés à la voie solvant.
La formation de l'électrolyte gel et des électrodes positive et négative peut également être réalisée par réticulation du polymère, par exposition à un rayonnement ultraviolet.
Dans l'étape a/, la voie UV consiste à former l'électrolyte gel par réticulation du polymère, par exposition à un rayonnement ultraviolet. Dans ce cas, la solution de sel de lithium dans un composé dinitrile n'est pas diluée dans un solvant (SD) préalablement à son mélange avec un polymère.
Dans les étapes b/ et c/, la voie UV consiste à préparer un mélange contenant le composé dinitrile, le polymère, le matériau actif d'électrode, éventuellement au moins un conducteur électronique et/ou un sel de lithium, puis à réticuler le polymère par exposition à un rayonnement ultraviolet.
Les polymères poly(butylméthacrylate-co-isobutylméthacrylate), poly(butyl méthacrylate), poly(isobutylméthacrylate), poly(butylméthacrylate-co-méthyl méthacrylate), poly(méthacrylate de méthyle) sont particulièrement adaptés à la voie UV.

La réticulation est assurée par la présence d'un agent réticulant. L'homme du métier saura faire appel à ses connaissances techniques pour choisir l'agent réticulant approprié.

Le dépôt des encres d'électrode peut être réalisé par diverses techniques conventionnelles de dépôt, notamment par enduction, par impression (sérigraphie, jet d'encre...) ou par pulvérisation.

La formation de l'électrolyte peut également comprendre une étape de dépôt selon l'une de ces techniques. Dans ce cas, le mélange contenant notamment le polymère et le composé dinitrile est déposé avant évaporation de l'éventuel solvant SD ou avant la réticulation du polymère.

Ainsi, la batterie selon l'invention peut être réalisée par dépôts successifs, avantageusement par impression :

- d'une encre d'électrode sur un substrat, de manière à former une première électrode ;
- d'une encre d'électrolyte sur la première électrode ;
- d'une encre d'électrode sur l'électrolyte, de manière à former une deuxième électrode de signe opposé à la première électrode.

Le substrat sur lequel est déposée l'encre formant la première électrode est avantageusement un substrat carboné, plus avantageusement un non-tissé en carbone.

De manière générale, il est préférable que le composé dinitrile soit soluble dans les composés mis en oeuvre (voie UV ou voie solvant) afin d'obtenir un mélange homogène des constituants.

Dans la batterie selon l'invention, la gélification du coeur électrochimique (électrolyte + électrodes) présente les avantages suivants :

- amélioration du procédé de fabrication grâce à l'absence de l'étape de remplissage par un électrolyte liquide ;
- amélioration de la sécurité, le composé dinitrile mis en oeuvre étant non inflammable et non toxique ;
- obtention d'une batterie flexible, voire déformable ;
- possibilité de nouvelles configurations de batterie tout solide, par exemple sous forme tridimensionnelle, sous forme de fils ou de câbles ;
- possibilité d'insertion de ces nouvelles configurations de batterie dans un textile par exemple ;
- amélioration de la stabilité électrochimique ;
- augmentation de la plage de température d'utilisation : de -20°C à 250°C.
- possibilité d'impression de la batterie sur un substrat polymère.

L'invention et les avantages qui en découlent ressortiront mieux des figures et exemples suivants donnés afin d'illustrer l'invention et non de manière limitative.

## DESCRIPTION DES FIGURES

La figure 1 illustre la conductivité ionique entre -10°C et 60°C d'électrolytes liquides.
La figure 2 illustre la conductivité ionique d'électrolytes gel selon l'invention.
La figure 3 illustre le diagramme de voltampérométrie cyclique d'un électrolyte gel selon l'invention.
La figure 4 illustre le diagramme de voltampérométrie cyclique d'un électrolyte gel selon l'invention.
La figure 5 illustre la capacité spécifique d'une électrode positive à différents régimes de charge et décharge, dans une demi-pile comprenant un système gel selon l'invention.
La figure 6 illustre la capacité spécifique d'une électrode positive à différents régimes de charge et décharge, dans une demi-pile comprenant un système gel selon l'invention.
La figure 7 illustre la tension en fonction de la capacité spécifique de systèmes gel selon l'invention.
La figure 8 illustre la capacité spécifique d'une pile comprenant un système gel selon l'invention, à différents régimes de charge et décharge.
La figure 9 illustre la capacité spécifique d'une pile comprenant un système gel selon l'invention.

## EXEMPLES DE REALISATION DE L'INVENTION

Plusieurs exemples de système électrochimiques gélifiés selon l'invention ont été préparés et utilisés en configuration de demi-pile ou de pile.

### a) Préparation de l'électrolyte gel selon l'invention :

Des sels de lithium LiTFSi (lithium bis-trifluorométhanesulfonimide) et LiBOB (lithium bis(oxatlato)borate) sont solubilisés à chaud dans un composé dinitrile (succinonitrile ou malononitrile qui sont solides à température ambiante) à 0.8M pour le LiTFSi et 0.2M pour le LiBOB.

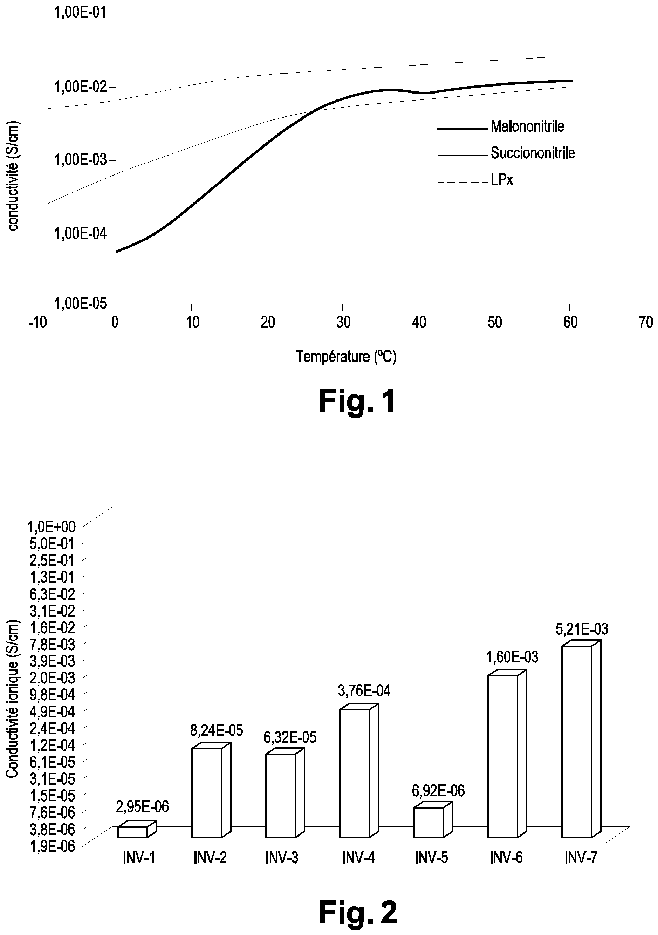

La figure 1 représente les mesures de conductivité ionique réalisées sur ces solutions entre -10 et 60°C, et comparées à un électrolyte liquide conventionnel et compatible avec une utilisation en système lithium-ion (LPx : électrolyte de type EC/PC/DMC + 1M de LiPF$_6$ ; EC = éthylène carbonate, PC = propylène carbonate, DMC = diméthyl carbonate).

Ces solutions de sels de lithium dans un composé dinitrile sont ensuite mélangées aux polymères qui serviront de matrice de gélification (tableau 1).

Le mélange est réalisé en voie solvant (addition de la solution de sel diluée dans un solvant à 40% d'extrait sec) ou en voie UV (addition de la solution de sel à 0.8 ou 0.2M).

La voie solvant permet d'obtenir un électrolyte gel après évaporation du solvant (en général de type N-méthyl-2-pyrrolidone NMP, méthyl éthyl cétone MEK, diméthylformamide DMF, tétrahydrofurane THF ou acétone).

La voie UV permet d'obtenir un électrolyte gel par réticulation du polymère par exposition à un rayonnement ultraviolet.

Dans tous les exemples, le rapport massique composé dinitrile/polymère est égal à 70/30.

Préalablement à la formation de l'électrolyte gel (par évaporation du solvant ou par réticulation UV), les différents mélanges sont enduits sur un substrat polymère (poly(téréphtalate d'éthylène), PET) ou verre afin d'obtenir des électrolytes gel de 40 à 90 μm d'épaisseur.

De manière générale, la préparation des électrolytes gel selon l'invention peut être réalisée dans des conditions anhydres ou non-anhydres, et ce sans influencer les propriétés de l'électrolyte gel. Cependant, les électrolytes gel destinés à être intégrés en système lithium métal sont réalisés en conditions anhydres de manière à éviter toute présence d'eau.

| Exemple | Polymère | Composé dinitrile | Sel de lithium | Voie |
|---------|----------|-------------------|----------------|------|
| INV-1 | PStyA | succinonitrile | LiTFSi | S (acétone) |
| INV-2 | A | succinonitrile | LiTFSi | UV |
| INV-3 | B | succinonitrile | LiTFSi | UV |
| INV-4 | C | succinonitrile | LiTFSi | UV |
| INV-5 | D | succinonitrile | LiTFSi | UV |
| INV-6 | PMMA | succinonitrile | LiTFSi | S (acétone) |
| INV-7 | PVdF-HFP | succinonitrile | LiTFSi | S (acétone) |

| Exemple | Epaisseur (μm) | Elongation | Homogénéité |
|---------|----------------|------------|-------------|
| INV-1 | 60 | 2 | 4 |
| INV-2 | 60 | 2 | 3 |
| INV-3 | 60 | 4 | 3 |
| INV-4 | 60 | 1 | 2 |
| INV-5 | 60 | 2 | 1 |
| INV-6 | 60 | 4 | 4 |
| INV-7 | 60 | 4 | 4 |

<u>Tableau 1</u> : Composition, conditions d'obtention et propriétés d'électrolytes gel selon l'invention.

PStyA                          : poly(styrène-co-acrylonitrile)

Polymère A                : poly(butylméthacrylate-co-isobutylméthacrylate)

Polymère B                : poly(butylméthacrylate)

Polymère C                : poly(isobutylméthacrylate)

Polymère D                : poly(butylméthacrylate-co-méthylméthacrylate)

Polymère PMMA        : poly(méthacrylate de méthyle)

Polymère PVdF-HFP  : poly(fluorure de vinylidène-hexafluoropropylène) ; référence 21216 de chez Solvay

Voie S                        : voie solvant, formation de l'électrolyte par évaporation du solvant

Voie UV                     : formation de l'électrolyte par réticulation du polymère par exposition à un rayonnement ultraviolet

Elongation et homogénéité : le classement a été effectué visuellement, la note 4 indiquant les meilleures propriétés mécaniques.

Les électrolytes gel INV-1 à INV-7 ont été caractérisés en termes de conductivité ionique (figure 2).

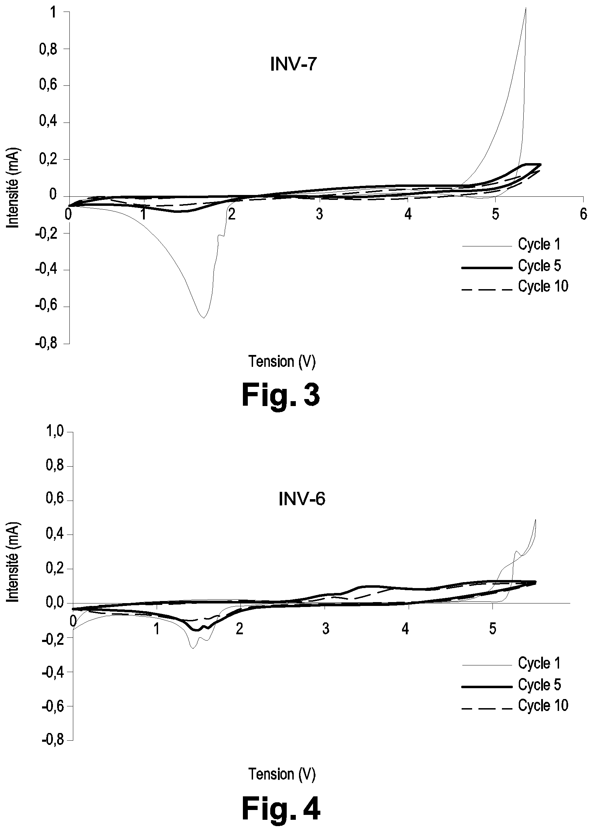

Les électrolytes gel INV-6 et INV-7 présentent la meilleure conductivité et les propriétés mécaniques les plus optimisées. Ces deux électrolytes gel sont stables jusqu'à 5V face au lithium, et sont donc utilisables en configuration lithium métal et lithium-ion pour l'ensemble des matériaux électro actifs conventionnellement utilisés (figures 3 et 4).

**b) Préparation de demi-piles et de piles comprenant un système gel selon l'invention :**

*Préparation des électrolytes gel :*

Les demi-piles et les piles comprenant le système gel selon l'invention ont été préparées à partir des électrolytes (tableau 2) et des électrodes (tableau 3) décrits ci-après.

Tableau 2 : Composition et conditions d'obtention d'électrolytes gel selon l'invention.

| Exemple | Polymère | Composé dinitrile | Sel de lithium | Voie |
|---------|----------|-------------------|----------------|------|
| INV-8 | PVdF-HFP | succinonitrile | LiTFSi | S (acétone) |
| INV-9 | PVdF-HFP | succinonitrile | LiBOB | S (acétone) |

La formulation (encre) suivante a été utilisée :

- PVdF-HFP : 15% en masse;
- succinonitrile : 35% en masse ;
- LiTFSi : 0.8M dans du succinonitrile ;
- LiBOB : 0.2M dans du succinonitrile ;
- acétone de 46%. : quantité ajustée de manière à obtenir un extrait sec (en masse)

Pour les exemples INV-8 et INV-9, le mélange succinonitrile/polymère/sel de lithium/acétone est enduit sur un substrat polymère de type PET, puis séché à 60°C pendant 2 heures pour éliminer le solvant de formulation (acétone).

Le dépôt une fois séché forme un gel manipulable et décollable de son substrat. Il est ensuite découpé au diamètre de 16 mm grâce à un emporte-pièce pour être assemblé au format pile bouton.

*Préparation des électrodes gel selon l'invention :*

Afin de réaliser un système entièrement gélifié, des électrodes gélifiées ont été préparées en intégrant un composé dinitrile et un polymère (tableau 3).

Tableau 3 : Composition des électrodes gel selon l'invention.

| Electrode | LFP (positive) | NMC (positive) | LTO (négative) |
|-----------|----------------|----------------|----------------|
| Matériau actif | $LiFePO_4$ | $LiNiMnCoO_2$ | $Li_4Ti_5O_{12}$ |
| Conducteur électronique | noir de carbone + fibres de carbone | | |
| Polymère | PVdF-HFP ou PMMA | | PVdF-HFP |
| Solvant d'électrolyte | succinonitrile | | |
| Sel de lithium | LiTFSi ou LiBOB | | |
| Solvant de formulation | diméthyl formamide (DMF) | | |

Pour les électrodes positives, la formulation (encre) suivante a été utilisée :

- $LiFePO_4$ ou $LiNiMnCoO_2$ : 48% en masse ;
- noir de carbone (Super P de chez Timcal) : 1% en masse ;
- fibres de carbone (VGCF-H de chez Showa Denko) : 1% en masse ;

- PVdF-HFP : 15% en masse ;
- succinonitrile : 35% en masse ;
- LiTFSi : 0.8M dans du succinonitrile ;
- LiBOB : 0.2M dans du succinonitrile ;
- DMF : quantité ajustée de manière à obtenir un extrait sec (en masse) de 40%.

Pour l'électrode négative, la formulation (encre) suivante a été utilisée :

- $Li_4Ti_5O_{12}$ : 48% en masse ;
- noir de carbone (Super P de chez Timcal) : 1% en masse ;
- fibres de carbone (VGCF-H de chez Showa Denko) : 1% en masse ;
- PVdF-HFP : 15% en masse ;
- succinonitrile : 35% en masse ;
- LiTFSi : 0.8M dans du succinonitrile ;
- LiBOB : 0.2M dans du succinonitrile ;
- DMF : quantité ajustée de manière à obtenir un extrait sec (en masse) de 40%.

*Préparation des systèmes batteries gélifiées de l'invention :*

Ces deux formulations (encres d'électrodes positive et négative) sont ensuite enduites, puis séchées à 60°C pendant 24 heures sur un substrat carboné constitué d'un non-tissé de carbone. L'utilisation d'un non-tissé de carbone permet de favoriser l'adhérence et de supprimer les problèmes de corrosion généralement rencontrés lorsque le matériau NMC et le sel LiTFSi sont déposés sur de l'aluminium.

La composition de l'encre obtenue peut changer suivant le matériau utilisé et l'application visée. Ainsi, en faisant varier le taux de matériau actif et l'épaisseur d'enduction des encres formulées sur le collecteur de courant, il est possible de contrôler le grammage de l'électrode, c'est à dire la masse de matériau actif par unité de surface. De manière générale, ce grammage est directement rapporté en capacité surfacique par rapport à la capacité spécifique ($mA.h.cm^{-2}$) du matériau considéré.

Une fois l'encre d'électrode enduite ou imprimée et séchée sur le collecteur en non-tissé de carbone, des pastilles sont découpées au diamètre de 14 millimètres grâce à un emporte-pièce, puis pesées. La pesée permet de connaître la masse de matériau actif contenu dans la pastille. Il est alors possible de connaître la capacité (mA.h) de la pastille.

La masse de matière active dans la pastille est déterminée grâce à la relation suivante :

$$m_{MA} = (m_{tot} - m_{collecteur}) * \%(MA)$$

dans laquelle $m_{MA}$, $m_{tot}$ et $m_{collecteur}$ représentent respectivement la masse de matière active, la masse totale de la pastille et la masse du collecteur de courant. Ces masses sont toutes en milligramme (mg). La notation *%(MA)* représente le pourcentage de matériau actif dans la formulation de l'électrode.

La capacité de la pastille ($C_{pastille}$) en mA.h peut alors être calculée :

$$C_{pastille} = m_{MA} * C_{MA} * 1000$$

$C_{MA}$ représentant la capacité spécifique du matériau actif en $mA.h.g^{-1}$.

Les capacités spécifiques utilisées pour les calculs des capacités sont reportées dans le tableau 4.

Tableau 4 : Capacités spécifiques pour les principaux matériaux d'électrodes utilisés.

| Matériau | Capacité spécifique ($mA.h.g^{-1}$) |
| --- | --- |
| LTO ($Li_4Ti_5O_{12}$) | 160 |
| NMC ($LiNi_{0.33}Mn_{0.33}Co_{0.33}O_2$) | 170 |
| LFP ($LiFePO_4$) | 160 |

Une fois les pastilles caractérisées (masse, épaisseur et capacité), elles sont séchées sous vide à 80°C pendant 48 heures avant d'être utilisées pour monter des piles bouton en milieu inerte. Contrairement aux systèmes conventionnels, aucune étape d'ajout d'un électrolyte liquide ou de phase d'imprégnation sous vide est requise.

De manière générale, les électrodes ne sont pas calandrées, contrairement aux électrodes conventionnelles. En effet, le calandrage peut générer l'exsudation de l'électrolyte hors de la matrice polymère. En outre, l'utilisation d'un substrat carboné rend cette étape superflue.

### c) Tests en pile

Une fois les électrodes et l'électrolyte gel selon l'invention assemblés au format pile bouton, celles-ci sont caractérisées sur un banc de cyclage pour évaluer leurs performances électrochimiques.

Deux types de configuration ont été évalués :

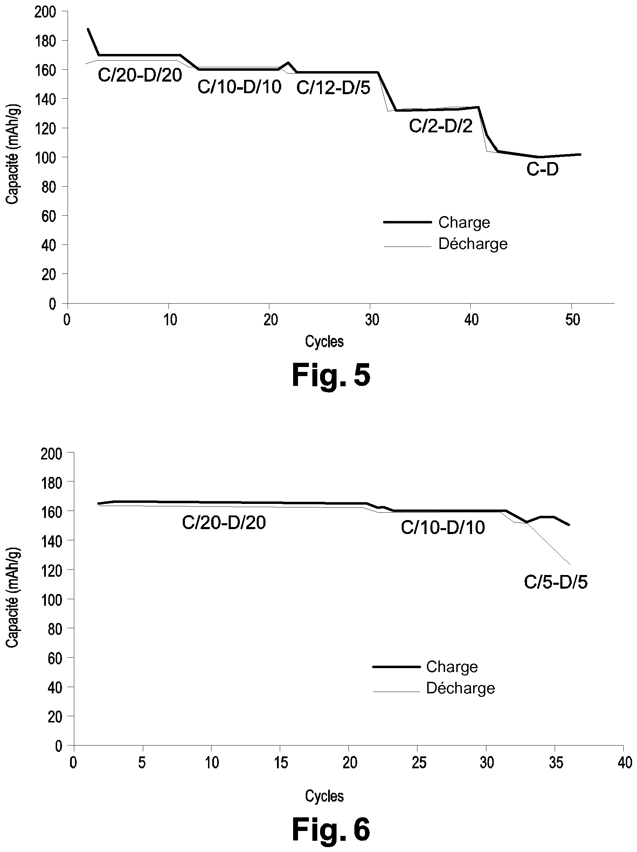

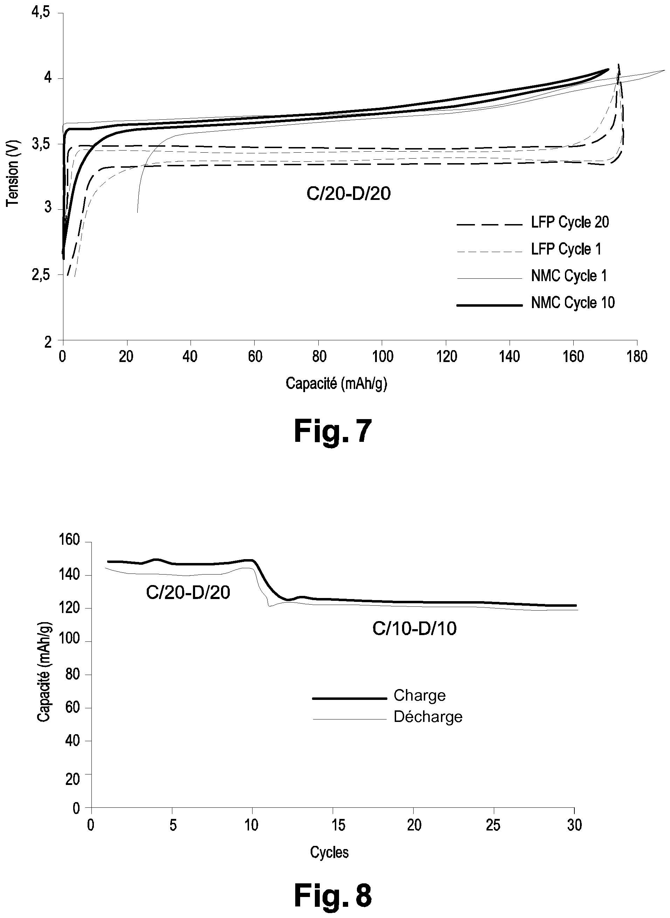

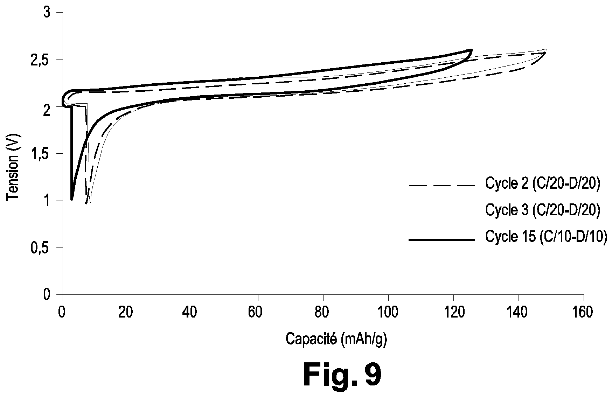

- configuration en demi-pile : un matériau d'électrode positive (LFP ou NMC) face au lithium métal (figures 5 à 7) ;
- configuration en système complet : une électrode positive (NMC) face à une électrode négative (LTO) (figures 8 et 9).

*Configuration en demi-pile : NMC vs. lithium métal (figures 5 et 7)*

Comme le montre la figure 5, les capacités spécifiques restituées sont similaires à la capacité spécifique théorique du matériau NMC (170 mA.h.g$^{-1}$).

En outre, et de manière surprenante, le système gel selon l'invention permet de restituer 100 mA.h.g$^{-1}$ à régime élevé (C/D), ce qui correspond à une charge et une décharge complètes en 1 heure.

Les résultats observés sont très stables, il n'y a pas de perte de capacité au cours des cycles.

*Configuration en demi-pile : LFP vs. lithium métal (figures 6 et 7)*

Comme le montre la figure 6, les capacités spécifiques restituées par le système LFP/Li métal sont similaires à la capacité spécifique théorique du matériau LFP (160 mA.h.g$^{-1}$).

En revanche, le matériau LFP étant un moins bon conducteur électronique que le matériau NMC, la capacité restituée chute assez rapidement pour des régimes supérieurs à C/10-D/10.

Comme le montre la figure 7, les deux systèmes NMC/Li et LFP/Li présentent des allures de charge et de décharge comparables aux meilleures formulations de la littérature avec des polarisations très faibles.

*Configuration en système complet : NMC vs. LTO (figures 8 et 9)*

Les figures 8 et 9 montrent que le système NMC/LTO gélifié est fonctionnel et très stable au cours des cycles. En outre, les capacités restituées sont légèrement inférieures aux capacités spécifiques théoriques (150 au lieu de 160 mA-h.g$^{-1}$).

### Revendications

1. Batterie lithium-ion comprenant :

   - une électrode positive comprenant un matériau actif d'électrode positive, et avantageusement un sel de lithium ;
   - un électrolyte comprenant un sel de lithium ;
   - une électrode négative comprenant un matériau actif d'électrode négative, et avantageusement un sel de lithium ;

   *caractérisée* **en ce que** l'électrode positive, l'électrode négative et l'électrolyte se présentent tous les trois sous la forme de gels, et comprennent tous les trois un polymère et un composé dinitrile de formule N≡C-R-C≡N ;
   R étant un groupement hydrocarboné $C_nH_{2n}$, n étant un nombre entier entre 1 et 2;
   le rapport massique composé dinitrile/polymère étant compris entre 60/40 et 90/10.

2. Batterie lithium-ion selon la revendication 1, *caractérisée* **en ce que** le composé dinitrile est le succinonitrile ou le malononitrile.

3. Batterie lithium-ion selon la revendication 1 ou 2, *caractérisée* **en ce que** le rapport massique composé dinitrile/polymère est compris entre 65/35 et 75/25.

**4.** Batterie lithium-ion selon l'une des revendications 1 à 3, *caractérisée* **en ce que** le polymère est choisi dans le groupe comprenant : poly(styrène-co-acrylonitrile) ; poly(butylméthacrylate-co-isobutylméthacrylate) ; poly(butylméthacrylate) ; poly(isobutylméthacrylate) ; poly(butylméthacrylate-co-méthylméthacrylate) ; poly(méthacrylate de méthyle) ; poly(fluorure de vinylidène-hexafluoropropylène) ; polyéthylène oxyde ; et polyvinylpyrrolidone.

**5.** Batterie lithium-ion selon l'une des revendications 1 à 4, *caractérisée* **en ce que** le sel de lithium est choisi dans le groupe comprenant : lithium bis-trifluorométhanesulfonimide ; lithium bis(oxatlato)borate ; $LiPF_6$ ; $LiClO_4$ ; $LiBF_4$; $LiAsF_6$; $LiCF_3SO_3$; $LiN(CF_3SO_2)_3$; $LiN(C_2F_5SO_2)$; et leurs mélanges.

**6.** Batterie lithium-ion selon l'une des revendications 1 à 5, *caractérisée* **en ce que**, dans l'électrolyte, le sel de lithium présente une concentration comprise entre 0.5 et 5M dans le composé dinitrile.

**7.** Procédé de préparation d'une batterie lithium-ion selon l'une des revendications 1 à 6, comprenant les étapes suivantes :

a/ préparation d'un électrolyte gel par :

• préparation d'une solution de sel de lithium dans un composé dinitrile de formule N=C-R-C=N, R étant un groupement hydrocarboné $C_nH_{2n}$, n étant un nombre entier entre 1 et 2 ;
• formation d'une encre d'électrolyte par mélange de cette solution avec un polymère, le rapport massique composé dinitrile/polymère étant compris entre 60/40 et 90/10 ;
• formation d'un électrolyte gel ;

b/ préparation d'une électrode positive gélifiée par :

• préparation d'une encre d'électrode positive contenant un matériau actif d'électrode positive, un polymère et un composé dinitrile de formule N≡C-R-C≡N, R étant un groupement hydrocarboné $C_nH_{2n}$, n étant un nombre entier entre 1 et 2, le rapport massique composé dinitrile/polymère étant compris entre 60/40 et 90/10 ;
• formation d'une électrode positive gélifiée, avantageusement par dépôt de l'encre d'électrode positive sur un collecteur de courant ;

c/ préparation d'une électrode négative gélifiée par :

• préparation d'une encre d'électrode négative contenant un matériau actif d'électrode négative, un polymère et un composé dinitrile de formule N≡C-R-C≡N, R étant un groupement hydrocarboné $C_nH_{2n}$, n étant un nombre entier entre 1 et 2, le rapport massique composé dinitrile/polymère étant compris entre 60/40 et 90/10 ;
• formation d'une électrode négative gélifiée, avantageusement par dépôt de l'encre d'électrode négative sur un collecteur de courant ;

d/ préparation d'une batterie par assemblage d'un empilement électrode positive/électrolyte/électrode négative.

**8.** Procédé de préparation d'une batterie lithium-ion selon la revendication 7, *caractérisé :*

- **en ce que** l'encre des étapes a/ à c/ comprend un solvant (SD),
- et **en ce que** la formation de l'électrolyte gel et des électrodes positive et négative est réalisée par évaporation du solvant SD.

**9.** Procédé de préparation d'une batterie lithium-ion selon la revendication 8, *caractérisé* **en ce que** le solvant SD est choisi dans le groupe comprenant N-méthyl-2-pyrrolidone, méthyl éthyl cétone, diméthylformamide, tétrahydrofurane et acétone.

**10.** Procédé de préparation d'une batterie lithium-ion selon la revendication 7, *caractérisé* **en ce que** la formation de l'électrolyte gel et des électrodes positive et négative est réalisée par réticulation du polymère, par exposition à un rayonnement ultraviolet.

**Patentansprüche**

1. Lithiumionenbatterie, umfassend:

   - eine positive Elektrode, die ein aktives positives Elektrodenmaterial und vorteilhafterweise ein Lithiumsalz enthält;
   - einen Elektrolyten, der ein Lithiumsalz enthält;
   - eine negative Elektrode, die ein aktives negatives Elektrodenmaterial und vorteilhafterweise ein Lithiumsalz enthält,

   **dadurch gekennzeichnet, dass** die positive Elektrode, die negative Elektrode und der Elektrolyt alle drei die Form eines Gels haben, und alle drei ein Polymer und eine Dinitrilverbindung der Formel N=C-R-C=N umfassen;
   wobei R eine Kohlenwasserstoffgruppe $C_nH_{2n}$ ist, worin n eine ganze Zahl zwischen 1 und 2 ist;
   wobei das Gewichtsverhältnis der Dinitrilverbindung/Polymer im Bereich von 60/40 bis 90/10 liegt.

2. Lithiumionenbatterie gemäß Anspruch 1, **dadurch gekennzeichnet, dass** es sich bei der Dinitrilverbindung um Succinonitril oder Malononitril handelt.

3. Lithiumionenbatterie gemäß Anspruch 1 oder 2, **dadurch gekennzeichnet, dass** das Gewichtsverhältnis der Dinitrilverbindung/Polymer im Bereich von 65/35 bis 70/25 liegt.

4. Lithiumionenbatterie gemäß einem der Ansprüche 1 bis 3, **dadurch gekennzeichnet, dass** das Polymer aus der Gruppe ausgewählt wird, die aus Poly(styrol-co-acrylonitril); Poly(butylmethacrylat-co-isobutylmethacrylat); Poly(butylmethacrylat); Poly(isobutylmethacrylat); Poly(butylmethacrylat-co-methylmethacrylat); Poly(methylmethacrylat); Poly(vinylidenfluorid-hexafluoropropylen); Polyethylenoxyd und Polyvinylpyrrolidon besteht.

5. Lithiumionenbatterie gemäß einem der Ansprüche 1 bis 4, **dadurch gekennzeichnet, dass** das Lithiumsalz aus der Gruppe ausgewählt wird, die aus Lithium-bis-trifluoromethansulfonimid; Lithium-bis(oxatlato)borat; $LiPF_6$, $LiClO_4$; $LiBF_4$; $LiAsF_6$; $LiCF_3SO_3$; $LiN(CF_3SO_2)_3$; $LiN(C_2F_5SO_2)$ und ihren Mischungen besteht.

6. Lithiumionenbatterie gemäß einem der Ansprüche 1 bis 5, **dadurch gekennzeichnet, dass** im Elektrolyt das Lithiumsalz eine Konzentration zwischen 0,5 und 5 M in der Dinitrilverbindung enthält.

7. Verfahren zur Herstellung einer Lithiumionenbatterie gemäß einem der Ansprüche 1 bis 6, das die folgenden Schritte enthält:

   a/ Herstellung eines Elektrolyt-Gels durch:

   - Herstellung einer Lithiumsalz-Lösung in einer Dinitrilverbindung der Formel N=C-R-C=N, wobei R eine Kohlenwasserstoffgruppe $C_nH_{2n}$ ist, worin n eine ganze Zahl zwischen 1 und 2 ist;
   - Bildung einer Elektrolyttinte durch Mischen dieser Lösung mit einem Polymer, wobei das Gewichtsverhältnis der Dinitrilverbindung/Polymer dabei im Bereich von 60/40 bis 90/10 liegt;
   - Bildung eines Elektrolyt-Gels:

   b/ Herstellung einer positiven Gel-Elektrode durch:

   - Herstellung einer positiven Elektrodentinte, die ein aktives positives Elektrodenmaterial, ein Polymer und eine Dinitrilverbindung der Formel N≡C-R-C≡N enthält, wobei R eine Kohlenwasserstoffgruppe $C_nH_{2n}$, ist, worin n eine ganze Zahl zwischen 1 und 2 ist, wobei das Gewichtsverhältnis der Dinitrilverbindung/Polymer im Bereich von 60/40 bis 90/10 liegt;
   - Bildung einer positiven Gelelektrode, am besten durch Abscheiden der positiven Elektrodentinte auf einem Stromkollektor;

   c/ Herstellung einer negativen Gel-Elektrode durch:

   - Herstellung einer negativen Elektrodentinte, die ein aktives negatives Elektrodenmaterial, ein Polymer und eine Dinitrilverbindung der Formel N≡C-R-C≡N enthält, wobei R eine Kohlenwasserstoffgruppe $C_nH_{2n}$ ist, worin n eine ganze Zahl zwischen 1 und 2 ist, wobei das Masseverhältnis der Dinitrilverbindung/Polymer im Bereich von 60/40 bis 90/10 liegt;
- Bildung einer negativen Gelelektrode, am besten durch Abscheiden der negativen Elektrodentinte auf einem Stromkollektor;

d/Herstellung einer Batterie durch Montage eines Stapels positive Elektrode/Elektrolyt/negative Elektrode.

8. Verfahren zur Herstellung einer Lithiumionenbatterie gemäß Anspruch 7, *gekennzeichnet dadurch, dass:*

- die Tinte der Stufen a/bis c/ein Lösungsmittel (SD) enthält,
- und dadurch, dass die Bildung des Elektrolytgels und der positiven und negativen Elektroden durch Verdampfung des Lösungsmittels SD erfolgt.

9. Verfahren zur Herstellung einer Lithiumionenbatterie gemäß Anspruch 8, *dadurch gekennzeichnet, dass* das Lösungsmittel SD aus der Gruppe ausgewählt wird, die aus N-Methyl-2-pyrrolidon, Methyl-Ethyl-Keton, Dimethylformamid, Tetrahydrofuran und Aceton besteht.

10. Verfahren zur Herstellung einer Lithiumionenbatterie gemäß Anspruch 7, *dadurch gekennzeichnet, dass* die Bildung des Elektrolytgels und der positiven und negativen Elektrode durch Benetzung des Polymers, durch Exposition gegenüber ultravioletter Strahlung ausgeführt wird.

## Claims

1. A lithium-ion battery comprising:

   - a positive electrode comprising an active positive electrode material, and advantageously a lithium salt;
   - an electrolyte comprising a lithium salt;
   - a negative electrode comprising an active negative electrode material, and advantageously a lithium salt;

   *characterized* in that the positive electrode, the negative electrode, and the electrolyte all three appear in the form of gels, and all three comprise a polymer and a dinitrile compound of formula $N{\equiv}C\text{-}R\text{-}C{\equiv}N$;
   R being a hydrocarbon group $C_nH_{2n}$, n being an integer between 1 and 2;
   the weight ratio of the dinitrile compound to the polymer being in the range from 60/40 to 90/10.

2. The lithium-ion battery of claim 1, *characterized* in that the dinitrile compound is succinonitrile or malononitrile.

3. The lithium-ion battery of claim 1 or 2, *characterized* in that the weight ratio of the dinitrile compound to the polymer is in the range from 65/35 to 75/25.

4. The lithium-ion battery of any of claims 1 to 3, *characterized* in that the polymer is selected from the group comprising: poly(styrene-co-acrylonitrile); poly(butylmethacrylate-co-isobutylmethacrylate); poly(butylmethacrylate); poly(isobutylmethacrylate); poly(butylmethacrylate-co-methylmethacrylate); poly(methylmethacrylate); poly(vinylidene fluoride-hexafluoropropylene); polyethylene oxide; and polyvinylpyrrolidone.

5. The lithium-ion battery of any of claims 1 to 4, *characterized* in that the lithium salt is selected from the group comprising: lithium bis-trifluoromethanesulfonimide; lithium bis(oxalato)borate; $LiPF_6$; $LiClO_4$; $LiBF_4$; $LiAsF_6$; $LiCF_3SO_3$; $LiN(CF_3SO_2)_3$; $LiN(C_2F_5SO_2)$; and mixtures thereof.

6. The lithium-ion battery of any of claims 1 to 5, *characterized* in that, in the electrolyte, the lithium salt has a concentration in the range from 0.5 to 5 M in the dinitrile compound.

7. A method of preparing the lithium-ion battery of any of claims 1 to 6, comprising the steps of:

   a/ preparing a gel electrolyte by:

   • preparing a solution of lithium salt in a dinitrile compound of formula $N{\equiv}C\text{-}R\text{-}C{\equiv}N$, R being a hydrocarbon group $C_nH_{2n}$, n being an integer between 1 and 2;
   • forming an electrolyte ink by mixing this solution with a polymer, the weight ratio of the dinitrile compound to the polymer being in the range from 60/40 to 90/10;
• forming a gel electrolyte;

b/ preparing a positive gel electrode by:

• preparing a positive electrode ink containing an active positive electrode material, a polymer, and a dinitrile compound having formula $N\equiv C\text{-}R\text{-}C\equiv N$, R being a hydrocarbon group $C_nH_{2n}$, n being an integer between 1 and 2, the weight ratio of the dinitrile compound to the polymer being in the range from 60/40 to 90/10;
• forming a positive gel electrode, advantageously by depositing the positive electrode ink on a current collector;

c/ preparing a negative gel electrode by:

• preparing a negative electrode ink containing an active negative electrode material, a polymer, and a dinitrile compound having formula $N\equiv C\text{-}R\text{-}C\equiv N$, R being a hydrocarbon group $C_nH_{2n}$, n being an integer between 1 and 2, the weight ratio of the dinitrile compound to the polymer being in the range from 60/40 to 90/10;
• forming a negative gel electrode, advantageously by depositing the negative electrode ink on a current collector;

d/ preparing a battery by assembly of a positive electrode/electrolyte/negative electrode stack.

8. The lithium-ion battery preparation method of claim 7, *characterized*:

- **in that** the ink of steps a/ to c/ comprises a solvent (SD),
- and **in that** the forming of the gel electrolyte and of the positive and negative electrodes is performed by evaporation of solvent SD.

9. The lithium-ion battery preparation method of claim 8, *characterized* **in that** solvent SD is selected from the group comprising N-methyl-2-pyrrolidone, methyl ethyl ketone, dimethylformamide, tetrahydrofuran, and acetone.

10. The lithium-ion battery preparation method of claim 7, *characterized* **in that** the forming of the gel electrolyte and of the positive and negative electrodes is performed by crosslinking of the polymer, by exposure to an ultraviolet radiation.

**Fig. 1**

**Fig. 2**

Fig. 3

Fig. 4

**Fig. 5**

**Fig. 6**

**Fig. 7**

**Fig. 8**

**Fig. 9**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- CA 2435218
- WO 2007012174 A
- WO 2008138110 A
- EP 2833462 A
- US 2013177799 A

**Littérature non-brevet citée dans la description**

- **TARASCON et al.** *Nature,* 2001, vol. 414, 359-367